# EUROPÄISCHE PATENTANMELDUNG

(11) **EP 1 841 283 A2**
(43) Veröffentlichungstag der Anmeldung: **03.10.2007**
(21) Anmeldenummer: 06126865.2
(22) Anmeldetag: 21.12.2006
(51) Int. Cl.: H04R 25/00

(54) **Im Ohr tragbares Hörhilfegerät mit einem Belüftungskanal**

(30) Priorität: 21.02.2006 DE 102006008044
(71) Anmelder: Siemens Audiologische Technik GmbH, 91058 Erlangen (DE)
(72) Erfinder: Röhrlein, Gerhard, 91315 Höchstadt (DE)
(74) Vertreter: Berg, Peter

(57) **Zusammenfassung**

Bei einem Hörhilfegerät (1) soll der barometrische Druckausgleich in einem Schallkanal (8, 8', 8") zwischen einem Hörer (7, 7', 7") und einer Cerumenschutzeinrichtung (9, 9', 9") mit einer gasdichten Membran (9A', 9A") auf einfache und kostengünstige Weise erreicht werden. Hierzu wird ein Druckausgleichskanal (11, 11', 11") vorgeschlagen, der in den Schallkanal (8, 8', 8") mündet. Der Druckausgleichskanal (11, 11', 11'') verbindet den Schallkanal (8, 8', 8") vorzugsweise mit einem Belüftungskanal (Vent). Er kann in einfacher Weise bei der Herstellung des Gehäuses des Hörhilfegerätes (1) mittels eines computergestützten Herstellungsverfahrens erzeugt werden.

## Beschreibung

Die Erfindung betrifft ein im Ohr tragbares Hörhilfegerät mit einem Gehäuse, das einen bei getragenem Hörhilfegerät dem Trommelfell eines Benutzers zugewandten ersten Gehäusebereich und einen dem Trommelfell abgewandten zweiten Gehäusebereich aufweist, einer in dem ersten Gehäusebereich angeordneten Cerumenschutzeinrichtung mit einer nicht porösen Membran, einem Belüftungskanal mit einer ersten, in dem ersten Gehäusebereich befindlichen Öffnung und einer zweiten, in dem zweiten Gehäusebereich befindlichen Öffnung, einem Hörer mit einer Schallauslassöffnung und mit einem Schallkanal zwischen der Schallauslassöffnung und der Cerumenschutzeinrichtung.

Im dem Ohr tragbare Hörhilfegeräte (Id0) weisen in der Regel einen Belüftungskanal (Vent) auf, der einen Durchgang durch das Hörhilfegerät von der bei getragenem Hörhilfegerät dem Trommelfell abgewandten Gehäuseseite (Faceplate) zu der dem Trommelfell zugewandten Gehäuseseite schafft. Dieser dient zur Belüftung des von dem Hörhilfegerät eingeschlossenen Gehörgang-Volumens, dem barometrischen Druckausgleich für dieses Volumen und zur Verringerung des Verschlusseffektes (Okklusionseffektes).

Hörhilfegeräte, insbesondere in dem Ohr Hörhilfegeräte, unterliegen der Verschmutzung mit Ohrenschmalz (Cerumen). Bei IdOs dringt das Cerumen in die Schallauslassöffnung des Hörhilfegerätes ein und verstopft den Schallkanal zwischen dem Hörhilfegerätelautsprecher, auch Hörer oder Receiver genannt, und der Schallauslassöffnung. Das führt zu einer Reihe von Problemen, angefangen bei akustischen Beeinträchtigungen, bis hin zur Unbrauchbarkeit des Hörhilfegerätes.

Bisher gibt es viele Ansätze, bei IdOs das Eindringen von Cerumen zu verhindern. In der Regel werden entweder kappen- bzw. bügelartige Schutzvorrichtungen verwendet, die entweder als Teil des Hörhilfegeräte-Gehäuses (siehe DE 38 02 250 C1 oder US 5,327,500) oder als Ein- bzw. Aufsatz in den Schallkanal bzw. auf das Hörhilfegerät (siehe US 5,327,500 oder EP 0 312 517 A2) ausgebildet sein können. Des Weiteren sind den Schallkanal verengende Cerumenschutzeinrichtungen bekannt, die ggf. auch gitter- oder kammerförmige Barrieren aufweisen und zum Einsatz in den Schallkanal oder zum Aufsetzen auf eine Tülle bestimmt sind (siehe US 4,972,488; US 5,970,157; WO 00/03561 oder DE 36 16 648 A1).

Ein wesentliches Problem stellt die Reinigung dieser Cerumenschutzeinrichtungen dar. In vielen Fällen muss die Cerumenschutzeinrichtung von Zeit zu Zeit ausgetauscht werden, was gerade bei ältern Hörhilfegeräteträgern mit einem oft beschwerlichen Gang zum Akustiker verbunden ist. Daher wurden wiederholt Cerumenschutzeinrichtungen vorgeschlagen, die als poröse oder nicht poröse (gasdichte) Membranen ausgebildet sind (siehe EP 310 866 A1; DE 196 40 796 A1 oder US 6,164,409) und die Schallauslassöffnung abdecken. Dadurch wird das Eindringen von Cerumen weitgehend verhindert. Weiterhin sind derartige Membranen im Vergleich zu anderen Cerumenschutzeinrichtungen leichter zu reinigen. Doch auch diese müssen bei Beschädigung möglichst einfach ausgetauscht werden können. Daher verbietet sich ein fester Einbau.

Aufsetzbare Cerumenschutzeinrichtungen haben sich nicht zuletzt auch aufgrund des zusätzlichen Platzbedarfs nicht durchgesetzt. Allerdings haben bisherige einsetzbare Cerumenschutzeinrichtungen zumeist den Nachteil, den akustisch wirksamen Querschnitt des Schallkanals zu verringern, was zu akustischen Nachteilen führen kann.

Gasdichte Membranen bieten grundsätzlich den größten Schutz, erfordern allerdings die Verwendung modifizierter Hörer, um den barometrischen Druckausgleich zu gewährleisten. Der zugehörige Auslass auf der Geräteaußenseite (Faceplate) bedingt ebenfalls einen entsprechenden zusätzlichen Platzbedarf. Außerdem muss gewährleistet sein, dass die Cerumenschutzeinrichtung sicher mit dem Schallkanal verbunden ist und dicht mit diesem abschließt. Dies wird bei einer in den Schallkanal einsetzbaren Cerumenschutzeinrichtung bisher zumeist durch eine eng am Schallkanal anliegende Verdickung bewirkt, die wulst- bzw. widerhakenförmig ausgebildet ist oder andere Elemente wie Stege, Noppen etc. aufweist.

Aus der US 2005/0074138 A1 ist eine Hörer-Lagerung bekannt, bei der sich zwischen einer Schallauslassöffnung des Hörers und einer Aufnahme in dem Hörhilfegeräte-Gehäuse ein Schallschlauch befindet.

Ein Hörhilfegerät gemäß dem Oberbegriff des 1. Patentanspruchs ist aus der US 6,164,409 bekannt. Nachteilig bei dem bekannten Hörhilfegerät ist, dass ein modifizierter Hörer erforderlich ist, um den barometrischen Druckausgleich zu gewährleisten.

Aufgabe der vorliegenden Erfindung ist es, bei einem im Ohr tragbaren Hörhilfegerät mit einer Cerumenschutzeinrichtung, die eine nicht poröse Membran umfasst, in einfacher Weise den für den Hörer erforderlichen barometrischen Druckausgleich zu erreichen.

Dieses Problem wird durch die im Patentanspruch 1 aufgeführten Merkmale gelöst.

Bei herkömmlichen Hörhilfegeräten ist ein Schallröhrchen, zumeist in Form eines elastischen Schallschlauches, vorhanden, dessen eines Ende über die Schallauslassöffnung des Hörers geschoben wird und dessen anderes Ende die Schallauslassöffnung des Hörhilfegerätes bildet. Im Unterschied hierzu ist bei einem Hörhilfegerät gemäß der Erfindung der Schallkanal zwischen der Schallauslassöffnung des Hörers und der Schallauslassöffnung in dem Gehäuse des Hörhilfegerätes nur zum Teil als Schallröhrchen, z.B. in Form eines elastischen Schallschlauches, ausgeführt. Teilweise ist der Schallkanal aber auch aus dem gleichen Material wie das Gehäuse des Hörhilfegerätes gefertigt und einstückig mit dem Gehäuse verbunden. Gleichzeitig kann der zuletzt genannte Teil des Schallkanals als Aufnahme für das Schallröhrchen dienen. Vorteilhaft ist dieser Teil dann so dimensioniert, dass das Schallröhrchen passgenau eingeschoben werden kann und dadurch gehalten wird. Alternativ oder zusätzlich kann die so ausgebildete Halterung auch wenigstens eine Anformung in Form eines Vorsprungs, Widerhakens, Steges, Noppen, umlaufenden Wulstes etc aufweisen, die das Schallröhrchen einklemmt und dadurch zusätzlich fixiert.

Bei einer anderen Ausführungsform ist statt der Anformung wenigstens eine Einbuchtung in dem betreffenden Teil des Schallkanals vorgesehen, wobei das verwendete Schallröhrchen mit wenigstens einem korrespondierenden äußeren Vorsprung versehen ist, so dass auch hierdurch eine Befestigung des Schallröhrchens in der Aufnahme bewirkt wird, ohne dabei den Innendurchmesser des Schallröhrchens zu verringern.

Weiterhin ist der bei getragenem Hörhilfegerät in Richtung des Trommelfells weisende Teil des Schallkanals als Aufnahme zur lösbaren Verbindung einer Cerumenschutzeinrichtung mit dem Hörhilfegerät ausgebildet. Die Cerumenschutzeinrichtung umfasst eine nicht poröse und damit luftundurchlässige Membran, die vorzugsweise aus einem Metall, einer Legierung oder einem Kunststoff, wie z.B. Plastik, gefertigt ist. Die Membran ist ferner verhältnismäßig dünn ausgebildet, so dass sie den vom Hörer erzeugten Schall überträgt. Durch die Membran ist der Schallkanal zwischen dem Hörer und der Membran gasdicht gegenüber dem Innenohr abgeschlossen. Damit die Membran funktionsfähig bleibt, muss für den Schallkanal ein barometrischer Druckausgleich erfolgen. Hierfür können modifizierte Hörer vorgesehen werden, die einen luftdurchlässigen Kanal zwischen dem Rückvolumen des Hörers und der Hörhilfegeräte-Außenseite oder dem Innenraum des Hörhilfegerätes erzeugen, falls letzterer wiederum eine luftdurchlässige Verbindung zur Außenseite des Hörhilfegerätes hat. Diese modifizierten Hörer sind jedoch verhältnismäßig teuer.

Bei der Erfindung ist daher zur Gewährleistung des barometrischen Druckausgleichs des Hörers ein Druckausgleichskanal vorgesehen, der zwischen dem Hörer und der nicht porösen Membran in den Schallkanal mündet. Dadurch können herkömmliche, in großen Stückzahlen gefertigte und damit kostengünstige Hörer verwendet werden. Der Druckausgleichskanal mündet an seinem anderen Ende vorzugsweise in den ohnehin vorhandenen Belüftungskanal, anstatt separat nach außen geführt zu werden. So ist keine weitere Gehäuseöffnung in dem Gehäuse des Hörhilfegerätes erforderlich. Dies spart Platz und hat zudem auch akustische Vorteile. Dabei kann es von Vorteil sein, wenn der Druckausgleichskanal an einer verhältnismäßig weit von der bei getragenem Hörhilfegerät dem Trommelfell zugewandten Gehäuseseite entfernt liegenden Stelle in den Belüftungskanal mündet. Dadurch wird eine Verschmutzung des Druckausgleichskanals durch Cerumen weitgehend verhindert. Der Druckausgleichskanal kann im Unterschied dazu aber auch an einer näher bei der dem Trommelfell zugewandten Gehäuseseite liegenden Stelle in den Belüftungskanal münden. Die genaue Anordnung der besagten Stelle erfolgt vorzugsweise auch unter Berücksichtigung akustischer Gegebenheiten. In einer speziellen Ausführungsform kann der Druckausgleichskanal auch direkt bzw. zumindest näherungsweise entlang der kürzesten Verbindungslinie zwischen dem Schallkanal und dem Belüftungskanal verlaufen.

Bei einer anderen Variante der Erfindung ist vorgesehen, dass der Druckausgleichskanal einen Durchgang von dem zumindest weitgehend luftdicht verschlossenen Schallkanal in den Innenraum des Hörhilfegerätes schafft, wobei dieser Innenraum durch Gehäusedurchbrüche, die beispielsweise für die Anordnung von Bedienelementen oder das Batteriefach erforderlich sind, gegenüber dem Bereich außerhalb des Hörhilfegerätes luftdurchlässig ist. Auch durch diese Maßnahme kann somit ein barometrischer Druckausgleich für den Schallkanal bewirkt werden.

Weiterhin kann der Belüftungskanal auch derart ausgebildet sein, dass er eine direkte Verbindung von dem Schallkanal zwischen dem Hörer und der Membran und dem das Hörhilfegerät umgebenden Raum schafft und beispielsweise in der Faceplate mündet.

Bei dem Hörhilfegerät gemäß der Erfindung umfasst die Cerumenschutzeinrichtung vorzugsweise eine in einem Träger befestigte, nicht poröse und damit gasdichte Membran. Der Träger wiederum wird in einer Aufnahme im Bereich der Schallauslassöffnung in dem Gehäuse des Hörhilfegerätes bzw. in dem Schallkanal befestigt. Dabei ist die Aufnahme vorteilhaft so bemessen, dass der Querschnitt des Schallkanals nicht durch die Cerumenschutzeinrichtung verengt wird. Sollte ein Austausch der Cerumenschutzeinrichtung notwendig werden, kann dieser mittels eines geeigneten Werkzeuges geschehen, wobei die Membran der alten Cerumenschutzeinrichtung bei dem Austausch zerstört werden kann.

Die Herstellung eines Hörhilfegerätes gemäß der Erfindung erfolgt vorzugsweise mit einem Computer-unterstützten Fertigungsverfahren, bei dem zunächst Daten über den individuellen Verlauf des Ohrkanals einer Person ermittelt werden. Aus der digitalen Repräsentation der internen Konturen des betreffenden Ohrkanals wird dann zunächst ein virtuelles Abbild eines Hörhilfegerätes entworfen, das exakt zu dem betreffenden Ohrkanal passt. In diesem Computermodell können bereits Komponenten des Hörhilfegerätes (Mikrofone, Hörer, Spannungsquelle, Elektronik etc) virtuell platziert werden. Auch die Lokalisation der Cerumenschutzeinrichtung sowie die zu deren Befestigung erforderliche Aufnahme in dem Gehäuse des Hörhilfegerätes lassen sich so bereits an dem Computermodell festlegen. Weiterhin lassen sich Anfangs- und Endpunkt des Druckausgleichskanals gemäß der Erfindung sowie der genaue Verlauf des Druckausgleichskanals bereits anhand des Computermodells planen. Die Fertigung der Schale des Hörhilfegerätes mit den integrierten Aufnahmen für die Cerumenschutzeinrichtung und das Schallröhrchen sowie mit dem Druckausgleichskanal gemäß der Erfindung erfolgt dann in einem computergesteuerten Fabrikationsprozess, z.B. mittels Lasersintern, Stereolithografie oder einem Thermojet-Druckverfahren. Dabei wird ein reales Hörhilfegerätegehäuse exakt nach dem Abbild des dreidimensionalen Computermodells erzeugt.

Das in dem Ohr getragene Hörhilfegerät gemäß der Erfindung muss nicht notwendigerweise alle Komponenten umfassen, die zur Versorgung eines Schwerhörigen erforderlich sind. Vielmehr ist es auch möglich, dass das Hörhilfegerät gemäß der Erfindung lediglich den Hörer enthält, und alle weiteren erforderlichen, elektrischen oder elektronischen Komponenten in einem weiteren Gerät enthalten sind, welches außerhalb des Gehörgangs, zum Beispiel hinter dem Ohr, getragen wird. Die zwischen dem weiteren Gerät und dem Hörhilfegerät bestehende Verbindung ist vorzugsweise drahtgebunden, sie kann aber auch als elektromagnetische Funkverbindung etc ausgebildet sein.

Die Erfindung wird nachfolgend anhand von Ausführungsbeispielen näher erläutert. Es zeigen:
Figur 1 ein in dem Ohr tragbares Hörhilfegerät mit einem Druckausgleichskanal gemäß einer ersten Variante der Erfindung,
Figur 2 ein in dem Ohr tragbares Hörhilfegerät mit einem Druckausgleichskanal gemäß einer zweiten Variante der Erfindung und
Figur 3 ein in dem Ohr tragbares Hörhilfegerät mit einem Druckausgleichskanal gemäß einer dritten Variante der Erfindung.

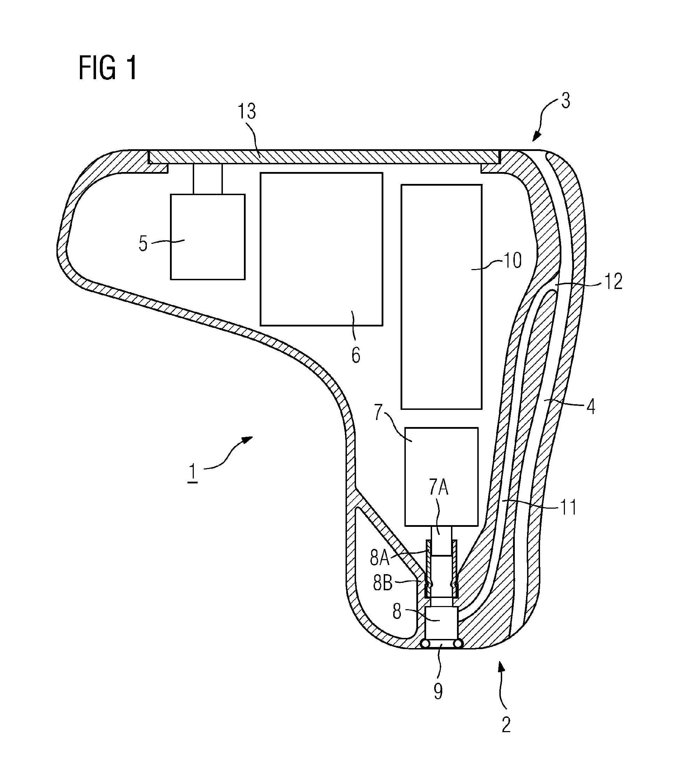

Bei der Variante gemäß Figur 1 umfasst das in dem Ohr tragbare Hörhilfegerät 1 ein Gehäuse mit einem bei getragenem Hörhilfegerät dem Trommelfell eines Benutzers zugewandten ersten Gehäusebereich 2 und einen dem Trommelfell abgewandten, zweiten Gehäusebereich 3. Letzterer wird üblicher Weise als Faceplate bezeichnet. Das Hörhilfegerät 1 ist zwischen dem ersten und dem zweiten Gehäusebereich von einem Belüftungskanal 4 zur Belüftung des bei getragenem Hörhilfegerät 1 von dem Hörhilfegerät 1 eingeschlossenen Gehörgang-Volumens durchzogen. In dem Gehäuse des Hörhilfegerätes 1 befinden sich wenigstens ein Mikrofon 5 zur Aufnahme eines akustischen Eingangssignals und Wandlung dieses Signals in ein elektrisches Signal, eine Signalverarbeitungseinheit 6 zur Verarbeitung und frequenzabhängigen Verstärkung des elektrischen Signals und ein Hörer 7 zur Wandlung des verarbeiteten Signals in ein akustisches Signal, das über einen Schallkanal 8 dem Gehör des Benutzers zugeführt wird. Ferner ist zur Spannungsversorgung der elektronischen Komponenten des Hörhilfegerätes 1 eine Spannungsquelle 10 in Form einer Batterie oder eines Akkus vorhanden. Zum Ein- und Ausbau der elektronischen Komponenten in das Hörhilfegerät 1 ist ein Teil 13 der Faceplate 3 von dem übrigen Gehäuse lösbar. Dieser lösbare Teil 13 kann ggf. auch mit Bedienelementen (nicht dargestellt) versehen sein.

Ein Abschnitt dieses Schallkanals 8 wird von einem Schallröhrchen 8A gebildet, dessen eines Ende über eine Schallauslassöffnung 7A in Form eines Schallauslassstutzens des Hörers 7 geschoben ist, und dessen anderes Ende in einer als Teil des Gehäuses ausgebildeten Aufnahme 8B befestigt und fixiert ist. Als Schallröhrchen 8A kann zum Beispiel ein elastischer Schallschlauch verwendet werden. Der vordere, das heißt in den dem Trommelfell zugewandten, ersten Gehäusebereich 2 mündende Abschnitt des Schallkanals 8 wird direkt durch das den Schallkanal 8 umgebende Gehäuse-Material des Hörhilfegerätes 1 geformt. Damit der Schallkanal 8 bzw. der Hörer 7 nicht mit Ohrschmalz (Cerumen) verstopft wird, ist im Bereich der Mündung des Schallkanals 8 in den ersten Gehäusebereich 2 eine Cerumenschutzeinrichtung 9 vorgesehen, die das Eintreten von Cerumen in den Schallkanal 8 verhindert.

Bei dem Hörhilfegerät 1 gemäß der Erfindung ist die Cerumenschutzeinrichtung 9 mit einer nicht porösen und damit gasundurchlässigen Membran versehen. Dadurch wäre der Schallkanal 8 zwischen dem Hörer 7 und der Schallauslassöffnung ohne zusätzliche Maßnahmen gasdicht abgeschlossen. Damit der Hörer 7 auch bei Luftdruckschwankungen funktionsfähig bleibt, ist jedoch ein barometrischer Druckausgleich für das eingeschlossene Volumen erforderlich. Gemäß der Erfindung wird dieser durch einen Druckausgleichskanal 11 erreicht, der im Ausführungsbeispiel den Schallkanal 8 mit dem Belüftungskanal 4 verbindet.

Im Ausführungsbeispiel gemäß Figur 1 verbindet der Druckausgleichskanal 11 den Schallkanal 8 nicht auf kürzestem Weg mit dem Belüftungskanal 4. Vielmehr mündet der Druckausgleichskanal 11 an einer Stelle 12 in den Belüftungskanal 4, die sich näher an der Öffnung des Belüftungskanals 4 in dem zweiten Gehäusebereich 3 (Faceplate) als an der Öffnung in dem ersten Gehäusebereich 2 befindet. Dies hat Einfluss auf das akustische Übertragungsverhalten des Hörhilfegerätes 1 und reduziert die Rückkopplungsneigung. Außerdem wirkt diese Ausgestaltung des Druckausgleichskanals 11 einer möglichen Verschmutzung bzw. Verstopfung, z.B. durch Cerumen, entgegen. Weiterhin ist bei dieser Ausführungsform keine Öffnung in der Gehäuseschale des Hörhilfegerätes 1 für den Druckausgleichskanal 11 erforderlich. Der Druckausgleichskanal könnte aber auch separat in der Faceplate 3 münden und somit keine direkte Verbindung zu dem Belüftungskanal 4 aufweisen (nicht dargestellt). Dann müsste dafür allerdings neben der Öffnung für den Belüftungskanal eine weitere Öffnung für den Druckausgleichskanal in der Faceplate 3 vorgesehen werden.

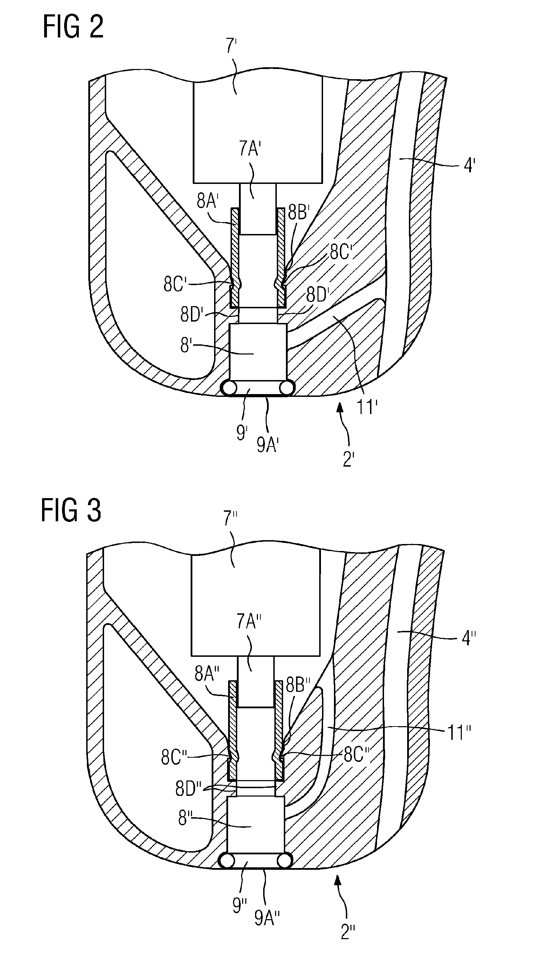

Ein weiteres Ausführungsbeispiel eines Hörhilfegerätes gemäß der Erfindung zeigt Figur 2. Im Unterschied zu Figur 1 ist hier jedoch lediglich der in den Gehörgang eines Benutzers ragende Teil des Hörhilfegerätes dargestellt. In Übereinstimmung mit dem Hörhilfegerät gemäß Figur 1 umfasst auch dieses Hörhilfegerät einen bei getragenem Hörhilfegerät dem Trommelfell zugewandten ersten Gehäusebereich 2' und einen Hörer 7' mit einer Schallauslassöffnung 7A'. Ferner bildet auch bei diesem Ausführungsbeispiel ein Schallröhrchen 8A' einen Abschnitt des Schallkanals 8'. Ein weiterer Abschnitt ist einteilig mit dem Gehäuse des Hörhilfegerätes ausgebildet und umfasst eine Aufnahme 8B' für das Schallröhrchen 8A'. Diese Aufnahme besitzt einen geringfügig kleineren Durchmesser als das Schallröhrchen 8A', so dass das Schallröhrchen 8A' in der Aufnahme gehalten wird. Zusätzlich ist die Aufnahme vorteilhaft mit wenigstens einer Anformung (Noppen, Keil, wulstartiger Ring etc.) versehen, durch die das Schallröhrchen 8A' zusätzlich fixiert wird. Im Ausführungsbeispiel sind hierzu die beiden keilförmigen Anformungen 8C' vorgesehen. Darüber hinaus umfasst im Ausführungsbeispiel die Aufnahme 8B' für das Schallröhrchen 8A' noch eine weitere Anformung 8D', die als ringförmiger Wulst in dem Schallkanal 8' ausgeführt ist und einen Anschlag für das Schallröhrchen 8A' erzeugt, so dass das Schallröhrchen 8A' nur bis zu diesem Anschlag in die dafür vorgesehene Aufnahme eingeführt werden kann.

Wie im Ausführungsbeispiel gemäß Figur 1, so ist auch in diesem Ausführungsbeispiel am Ende des Schallkanals 8' eine Cerumenschutzeinrichtung 9' mit einer luftundurchlässigen Membran 9A' vorhanden, die den Schallkanal 8' luftdicht abschließt. Vorteilhaft schließt die Membran 9A' zumindest weitgehend oberflächenbündig mit der Gehäuseoberfläche des Hörhilfegerätes ab, so dass die Membran 9A' leicht, z.B. durch Abwischen, gereinigt werden kann. Gemäß der Erfindung soll auch in diesem Ausführungsbeispiel der Druckausgleich mittels eines Druckausgleichskanals 11' erfolgen.

Im Unterschied zu dem Ausführungsbeispiel gemäß Figur 1 ist bei diesem Ausführungsbeispiel der Schallkanal 8' jedoch durch den Druckausgleichskanal 11' auf verhältnismäßig kurzem Weg mit dem Belüftungskanal 4' verbunden. Dies hat Auswirkungen auf das akustische Übertragungsverhalten des betreffenden Hörhilfegerätes.

Eine weitere Ausführungsform der Erfindung zeigt Figur 3. Die dargestellten, mit zweigestrichenen Bezugszeichen versehenen Komponenten stimmen weitgehend mit den in den Figuren 1 und 2 veranschaulichten Komponenten überein. Im Unterschied zu den zuvor gezeigten Ausführungsbeispielen erfolgt hier der Druckausgleich aber nicht über den Belüftungskanal 4". Der Druckausgleichskanal 11" mündet stattdessen in den Innenraum des gezeigten Hörhilfegerätes. Dies ist möglich, da das Gehäuse des Hörhilfegerätes, z.B. durch Gehäuseöffnungen für ein Batteriefach, Bedienelemente und dergleichen, ohnehin nie vollständig nach außen abgedichtet ist und daher der barometrische Druckausgleich auch über den Gehäuse-Innenraum erfolgen kann.

Die in dem Ohr tragbaren Hörhilfegeräte gemäß den Ausführungsbeispielen sind vorzugsweise nach einem aus dem Bereich des Rapid Prototyping bekannten Herstellungsverfahren, z.B. SLS oder SLA hergestellt. Dies hat den Vorteil, dass dabei zunächst ein dreidimensionales Computer-Modell des jeweiligen Hörhilfegerätes erzeugt wird, bevor das eigentliche Gehäuse als sehr genaues Abbild dieses Computermodells in einem weitgehend automatisierten und computergesteuerten Herstellungsprozess hergestellt wird. Alle Details des Gehäuses sowie der einstückig mit diesem ausgebildeten Gehäuse-Anformungen lassen sich so bereits vor der eigentlichen Fertigung an dem Computermodell festlegen. So lassen sich z.B. - zunächst anhand des Computermodells und anschließend in dem realen Gehäuse - der Druckausgleichskanal, eine Aufnahme für die Cerumenschutzeinrichtung sowie eine Halterung für das Schallröhrchen erzeugen.

## Patentansprüche

1. Im Ohr tragbares Hörhilfegerät (1) mit
- einem Gehäuse, das einen bei getragenem Hörhilfegerät (1) dem Trommelfell eines Benutzers zugewandten ersten Gehäusebereich (2) und einen dem Trommelfell abgewandten zweiten Gehäusebereich (3) aufweist,
- einer in dem ersten Gehäusebereich (2) angeordneten Cerumenschutzeinrichtung (9, 9', 9") mit einer nicht porösen Membran (9A', 9A"),
- einem Belüftungskanal (4, 4', 4") mit einer ersten, in dem ersten Gehäusebereich (2) befindlichen Öffnung und einer zweiten, in dem zweiten Gehäusebereich (3) befindlichen Öffnung,
- einem Hörer (7, 7', 7") mit einer Schallauslassöffnung (7A, 7A', 7A"),
- einem Schallkanal (8, 8', 8") zwischen der Schallauslassöffnung (7A, 7A', 7A") und der Cerumenschutzeinrichtung (9, 9', 9''),
**gekennzeichnet durch**
einen Druckausgleichskanal (11, 11', 11"), der in den Schallkanal (8, 8', 8") mündet.

2. Im Ohr tragbares Hörhilfegerät (1) nach Anspruch 1, wobei der Druckausgleichskanal (11, 11', 11") den Schallkanal (8, 8', 8") mit dem Belüftungskanal (4, 4', 4") verbindet.

3. Im Ohr tragbares Hörhilfegerät (1) nach Anspruch 2, wobei der Druckausgleichskanal (11, 11', 11") zumindest näherungsweise entlang einer direkten Verbindungslinie zwischen dem Belüftungskanal (4, 4', 4") und dem Schallkanal (8, 8', 8") verläuft.

4. Im Ohr tragbares Hörhilfegerät (1) nach Anspruch 2, wobei der Druckausgleichskanal (11, 11', 11") im Unterschied zu einem Verlauf entlang einer direkten Verbindungslinie zwischen dem Belüftungskanal (4, 4', 4") und dem Schallkanal (8, 8', 8") erst an einer in Richtung des zweiten Gehäusebereichs (3) verschobenen Stelle (12) in den Belüftungskanal (4, 4', 4") mündet.

5. Im Ohr tragbares Hörhilfegerät (1) nach Anspruch 1, wobei der Druckausgleichskanal (11, 11', 11") den Schallkanal (8, 8', 8") mit dem Innenraum des Hörhilfegerätes (1) verbindet.

6. Im Ohr tragbares Hörhilfegerät (1) nach einem der Ansprüche 1 bis 5, wobei der Druckausgleichskanal (11, 11', 11") einen geringeren Querschnitt aufweist als der Belüftungskanal (4, 4', 4'').

7. Im Ohr tragbares Hörhilfegerät (1) nach einem der Ansprüche 1 bis 6, wobei sich der Schallkanal (8, 8', 8") wenigstens aus einem Schallröhrchen (8A, 8A', 8A") und einem durch das Gehäuse des Hörhilfegerätes (1) gebildeten Abschnitt zusammensetzt und wobei sich an letzteren Abschnitt eine ebenfalls durch das Gehäuse des Hörhilfegerätes (1) gebildete Aufnahme (8B, 8B', 8B") für das Schallröhrchen (8A, 8A', 8A") anschließt.

8. Im Ohr tragbares Hörhilfegerät (1) nach Anspruch 7, wobei der Druckausgleichskanal (11, 11', 11") in einem Bereich zwischen dem Schallröhrchen (8A, 8A', 8A") und der Cerumenschutzeinrichtung (9, 9', 9") in den Schallkanal (8, 8', 8") mündet.

9. Im Ohr tragbares Hörhilfegerät (1) nach einem der Ansprüche 1 bis 8, wobei eine Aufnahme für die Cerumenschutzeinrichtung (9, 9', 9") und/oder die Aufnahme (8B, 8B', 8B") für das Schallröhrchen (8A, 8A', 8A") einstückig mit dem Gehäuse des Hörhilfegerätes (1) ausgebildet ist.

10. Im Ohr tragbares Hörhilfegerät (1) nach einem der Ansprüche 7 bis 9, wobei das Schallröhrchen (8A, 8A', 8A") und/oder die Aufnahme (8B, 8B', 8B") für das Schallröhrchen (8A, 8A', 8A") Mittel zur Befestigung und Fixierung des Schallröhrchens (8A, 8A', 8A") in der Aufnahme (8B, 8B', 8B") umfasst.

11. Im Ohr tragbares Hörhilfegerät (1) nach Anspruch 9 oder 10, wobei die Cerumenschutzeinrichtung (9, 9', 9") lösbar mit dem Gehäuse des Hörhilfegerätes (1) verbindbar ist.

12. Im Ohr tragbares Hörhilfegerät (1) nach einem der Ansprüche 1 bis 11, umfassend wenigstens ein Mikrofon (5) zur Aufnahme eines akustischen Eingangssignals und Wandlung in ein elektrisches Eingangssignal, eine Signalverarbeitungseinheit (6) zur Verarbeitung und frequenzabhängigen Verstärkung des Eingangssignals, den Hörer (7, 7', 7") mit der Schallauslassöffnung (7A, 7A', 7A") zur Wandlung des verarbeiteten und verstärkten Eingangssignals in ein akustisches Ausgangssignal und zur Abgabe des akustischen Ausgangssignals in den Gehörgang des Benutzers sowie mit einer Spannungsquelle (10) zur Spannungsversorgung.

13. Im Ohr tragbares Hörhilfegerät (1) nach einem der Ansprüche 1 bis 12, wobei das Gehäuse des Hörhilfegerätes (1) unter Anwendung eines Rapid-Prototyping-Verfahrens hergestellt ist.
